# EUROPEAN PATENT APPLICATION

(11) **EP 4 036 401 A1**
(43) Date of publication of application: **03.08.2022**
(21) Application number: 21153825.1
(22) Date of filing: 27.01.2021
(51) Int. Cl.: F03D 7/04, H04L 29/06

(54) **A METHOD FOR TRANSFERRING DATA FROM A WIND FARM TO A DATA CENTRE**

(71) Applicant: VESTAS WIND SYSTEMS A/S, 8200 Aarhus N (DK)
(72) Inventor: REIMER, Anders, 8370 Hadsten (DK); THORSEN, Morten Tim, 8381 Tilst (DK)
(74) Representative: Vestas Patents Department

(57) **Abstract**

A method for transferring data from at least one wind turbine (2, 9) to a data centre (10) arranged remotely with respect to the wind turbine (2) is disclosed. Data packages (11) are transferred from the wind turbine (2, 9) to the data centre (10), via at least one first communication channel (7). Upon receipt of a data package (11) at the data centre (10), an acknowledgement (12) is generated and the acknowledgement (12) is transferred from the data centre (10) to the wind turbine (2, 9), via a second communication channel (8) being parallel to the first communication channel(s) (7). The acknowledgements (12) are received at the wind turbine (2, 9).

## Description

### FIELD OF THE INVENTION

The present invention relates to a method for transferring data from at least one wind turbine to a data centre arranged remotely with respect to the wind turbine. The wind turbine may, e.g., form part of a wind farm. The method according to the invention allows data packages to be transferred to the data centre with low latency as well as with a low risk of package loss.

### BACKGROUND OF THE INVENTION

When operating a wind turbine, or a wind farm comprising a plurality of wind turbines, it is sometimes required to transfer data from the wind turbine to a remote data centre. This could, e.g., be in order to allow monitoring of the wind turbine, and possibly allow a remotely positioned operator to react to alarms or other issues which require attention, and/or in order to collect operational data for statistical purposes.

In the case that data being transferred are of a kind which requires actions, it is important that the data reaches the data centre fast and reliably, i.e. with minimal data package loss.

In order to ensure that the data reaches the data centre reliably, the data centre may generate an acknowledgement upon receipt of a data package, and return this to the wind turbine. Thereby the wind turbine can keep track of whether or not a data package has been received at the data centre, and if an acknowledgement is not received, the data package can be retransferred.

The transfer of the data packages and the acknowledgements are normally performed via the same communication channel. Thereby the process described above introduces a latency between transfer of successive data packages from the wind turbine, of two times the transfer time between the wind turbine and the data centre, because the wind turbine needs to receive acknowledge of receipt of a given data package before a subsequent data package is transferred.

In order to increase the throughput of data from the wind turbine to the data centre, the data packages may be batched. Thereby more data is transferred in each cycle of data transfer and acknowledgement, thereby increasing the amount of data transferred per unit time, via the communication channel, as compared to a setup where each data package is transferred separately. However, this has the disadvantage that at least some of the data packages forming part of a batch are delayed. In the case that the data packages are time critical, e.g. if the transferred data is of a kind which requires fast reactions, this may be unacceptable.

As an alternative, the data packages may simply be transferred individually without awaiting acknowledgement. This would ensure that the data packages are transferred without delay. However, this introduces a risk that data packages are lost, and this may be unacceptable if the transferred data is critical.

### DESCRIPTION OF THE INVENTION

It is an object of embodiments of the invention to provide a method for transferring data from a wind turbine to a data centre, in which time sensitive data can be transferred fast, reliably and without delay.

The invention provides a method for transferring data from at least one wind turbine to a data centre arranged remotely with respect to the wind turbine, the method comprising the steps of:
- transferring data packages from the wind turbine to the data centre, via at least one first communication channel,
- upon receipt of a data package at the data centre, generating an acknowledgement and transferring the acknowledgement from the data centre to the wind turbine, via a second communication channel being parallel to the first communication channel(s), and
- receiving the acknowledgements at the wind turbine.

Thus, the method according to the invention is a method for transferring data from at least one wind turbine to a data centre. The data centre is arranged remotely with respect to the wind turbine, i.e. the data centre is positioned at a location which differs from the location of the wind turbine. For instance, if the wind turbine forms part of a wind farm, the data centre may be arranged outside the wind farm. The data centre may, e.g., be of a kind which receives data from many wind turbines, e.g. from many wind farms. This could, e.g., be with the purpose of monitoring the wind turbines and/or collecting operational data for statistical purposes. Furthermore, the wind turbines may be controlled, at least to a certain extent, from the data centre. In this case control signals may be generated at the data centre, based on received data, and transferred to relevant wind turbines.

The data being transferred may, e.g., be operational data of the wind turbine, such as power output, operational status, sensor measurements, weather and/or wind data, etc.

In the method according to the invention, data packages are transferred from the wind turbine to the data centre, via at least one first communication channel. Accordingly, the data is transferred from the wind turbine in the form of data packages, and the data packages are received at the data centre.

Upon receipt of a data package at the data centre, an acknowledgement is generated and transferred from the data centre to the wind turbine, where it is received. Thereby it can be ensured that a data package, which was transferred from the wind turbine, was actually received at the data centre. Accordingly, a reliable transfer of data is ensured.

The acknowledgement is transferred from the data centre to the wind turbine via a second communication channel which is parallel to the first communication channel(s). Accordingly, the communication channel which is used for transferring acknowledgements from the data centre to the wind turbine is not the same communication channel(s) which is/are used for transferring data packages from the wind turbine to the data centre. Therefore it is not necessary to await receipt of acknowledgement of one data package before the next data package is transferred from the wind turbine to the data centre, thereby essentially eliminating latency. This allows the data to be transferred in small data packages, i.e. without batching, without introducing latency and while minimising package loss, since acknowledgements are generated and transferred from the data centre to the wind turbine.

Accordingly, due to the parallel first and second communication channels, time critical data can be transferred fast and reliably, and without delay, from the wind turbine to the data centre.

The second communication channel may be dedicated for transferring acknowledgements from the data centre to the wind turbine. According to this embodiment, the second communication channel is applied solely for transferring acknowledgements from the data centre to the wind turbine. This minimises the risk that an acknowledgement is lost during transfer from the data centre to the wind turbine.

As an alternative, the second communication channel may further be applied for other purposes, e.g. for transferring control commands from the data centre to the wind turbine.

Data packages may be transferred sequentially from the wind turbine to the data centre, and a subsequent data package may be transferred without awaiting the acknowledgement of a previous data package.

According to this embodiment, the transfer of data packages from the wind turbine to the data centre is performed independently of the receipt of the acknowledgements, in the sense that transfer of a given data package is initiated regardless of whether or not acknowledgment for previously transferred data packages have been received. For instance, the data packages may simply be transferred when they are ready, i.e. without delay, and even before a previous data package has been received at the data centre. Accordingly, several data packages may be kept 'in flight' simultaneously, and the data transfer capacity of the first communication channel(s) can be utilised efficiently, thereby maximising the data throughput. However, it is still tracked that the acknowledgements are actually received at the wind turbine, thereby ensuring that the data packages are reliably received at the data centre.

The step of transferring data packages from the wind turbine to the data centre may be initiated at the wind turbine.

According to this embodiment, the transfer of data is initiated without the data centre, or any other entities arranged remotely with respect to the wind turbine, contacting the wind turbine. This reduces the risk of unauthorised access to the wind turbine, including the risk of cyberattacks on the wind turbine.

As an alternative, the step of transferring data packages from the wind turbine to the data centre may be initiated by the data centre or by a separate entity, e.g. by the data centre requesting specific data.

The method may further comprise the step of:
- in the case that a data package has been lost, retransferring the data package.

According to this embodiment, in the case that it is discovered that a data package has not been received at the data centre, i.e. that the data package has been lost, the wind turbine will retransfer the data package. Thereby it is ensured that the data received at the data centre is complete, i.e. the data packages are transferred reliably. In particular, it is ensured that critical data is in fact received at the data centre.

The method may further comprise the step of determining that a data package has been lost if a predetermined time period has elapsed since the data package was transferred from the wind turbine to the data centre, and no acknowledgement has been received yet.

It can normally be expected that an acknowledgement of a given data package is received when approximately two times the data transfer time between the wind turbine and the data centre has elapsed since the transfer of the data package was initiated. This would allow the data package to be transferred from the wind turbine to the data centre, and the acknowledgement to be transferred from the data centre to the wind turbine. A small delay could, of course, occur during the transfer of the data package and/or the acknowledgement. However, if an acknowledgement has not been received when the expected time has elapsed, allowing for a small delay, this is an indication that either the data package did not reach the data centre, and an acknowledgement was therefore not generated, or the acknowledgement has been lost. In any event, when this occurs the wind turbine is unable to verify that the data package was in fact received at the data centre. Therefore, in this case the data package may be regarded as lost, and a retransfer is therefore initiated.

Alternatively or additionally, the method may further comprise the step of determining that a data package has been lost if acknowledgement of at least one subsequent data package has been received, and no acknowledgement of the data package has been received yet, where the at least one subsequent data package was transferred from the wind turbine to the data centre after transfer of the data package from the wind turbine to the data centre.

It may generally be expected that acknowledgements are received in approximately the same order as the data packets were transferred. Accordingly, if acknowledgement of a given data package has not been received, but acknowledgements of one or more data packages which were transferred later start ticking in, this is an indication that the earlier data package has either not been received at the data centre, or that the acknowledgement of the data package has been lost. Similarly to the situation described above, it is not possible to verify that the data package has in fact been received at the data centre, and the data package is therefore considered as lost, and retransfer is initiated.

The data packages may be transferred from the wind turbine to the data centre via at least two parallel first communication channels. Thereby a high data transfer capacity can be obtained. For instance, data packages may be transferred simultaneously via the parallel first communication channels, thereby allowing a large number of data packages to be 'in flight' simultaneously.

The method may further comprise the steps of:
- generating control commands for the wind turbine based on data of at least one data package, at the data centre, and
- transferring the generated control commands from the data centre to the wind turbine.

According to this embodiment, the data transferred from the wind turbine to the data centre is of a kind which requires action. For instance, some of the data packages may contain sensor measurements applied during control of the wind turbine. Upon receipt of such data, the appropriate control commands are generated at the data centre, and the generated control commands are transferred back to the wind turbine. Thus, the data centre has a 'monitoring' role in controlling the wind turbine.

The generated control commands may, e.g., take the operation of other wind turbines, or other considerations which are not available locally at the wind turbine, into account.

In this embodiment it is particularly relevant that the data packages are received fast, reliably and without delay at the data centre, because this allows the data centre to generate the control signals timely and based on accurate and up to date information, e.g. real time or nearly real time data.

The method may further comprise the step of operating the wind turbine in accordance with the generated control commands.

The wind turbine may form part of a wind farm, the wind farm comprising a plurality of wind turbines, and the data packages may be transferred from the wind farm to the data centre and the acknowledgements may be received at the wind farm.

The data packages may be transferred by the wind turbine, or from another entity arranged within the wind farm, e.g. a power plant controller (PPC), a central communication hub, another wind turbine, etc.

### BRIEF DESCRIPTION OF THE DRAWINGS

The invention will now be described in further detail with reference to the accompanying drawings in which
Fig. 1 is a diagrammatic view of a wind farm being applied for performing a method according to an embodiment of the invention,
Fig. 2 illustrates transfer of data packages and acknowledgements in accordance with a method according to an embodiment of the invention, and
Fig. 3 is a flow chart illustrating a method according to an embodiment of the invention.

### DETAILED DESCRIPTION OF THE DRAWINGS

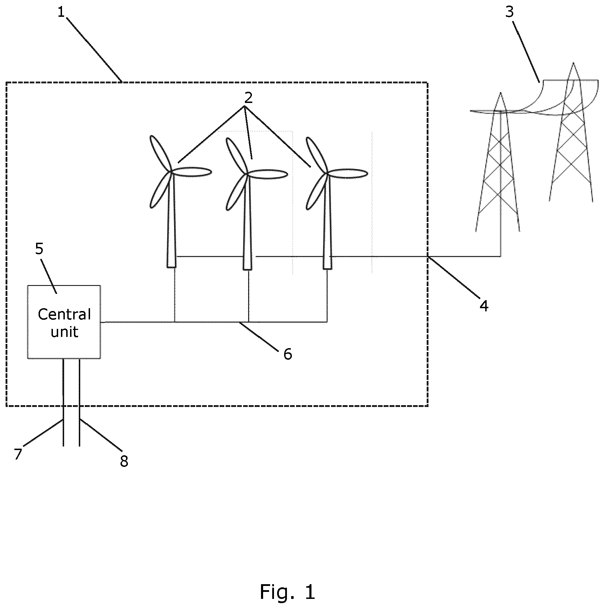

Fig. 1 is a diagrammatic view of a wind farm 1 comprising a plurality of wind turbines 2, three of which are shown. The wind turbines 2 are connected to a power grid 3 via a point of common coupling 4. Accordingly, the power produced by the wind turbines 2 is supplied to the power grid 3.

The wind turbines 2 are further connected to a central unit 5 via a communication connection 6, thereby allowing data collected at the wind turbines 2 to be communicated to the central unit 5. The central unit 5 may, e.g., be a central data hub of the wind farm 1, a SCADA system, a power plant controller (PPC), or any other suitable kind of central unit.

The central unit 5 is connected to a remote data centre (not shown), i.e. a data centre arranged outside the wind farm 1, via a first communication channel 7 and a second communication channel 8. Data received from the wind turbines 2 is transferred from the central unit 5 to the remote data centre, in the form of data packets, via the first communication channel 7.

Upon receipt of a data package at the remote data centre, an acknowledgement is generated and transferred from the remote data centre to the central unit 5 via the second communication channel 8. Thereby the central unit 5 is able to verify that the transferred data packages are safely received at the remote data centre. If acknowledgement of a data package is not received, the central unit 5 can retransfer this data package.

Accordingly, the data packages and the acknowledgements are transferred between the central unit 5 and the remote data centre via separate, parallel communication channels 7, 8. Thereby, when one data package has been transferred, via the first communication channel 7, it is not necessary to await receipt of the corresponding acknowledgement before the next data package is transferred. This minimises the latency of the system, and only the transfer capacity of the communication channels 7, 8 limits the data transfer rate.

Accordingly, it can be ensured that time critical data originating from the wind turbines 2 is received at the remote data centre in a timely, fast and reliable manner, and with minimal latency.

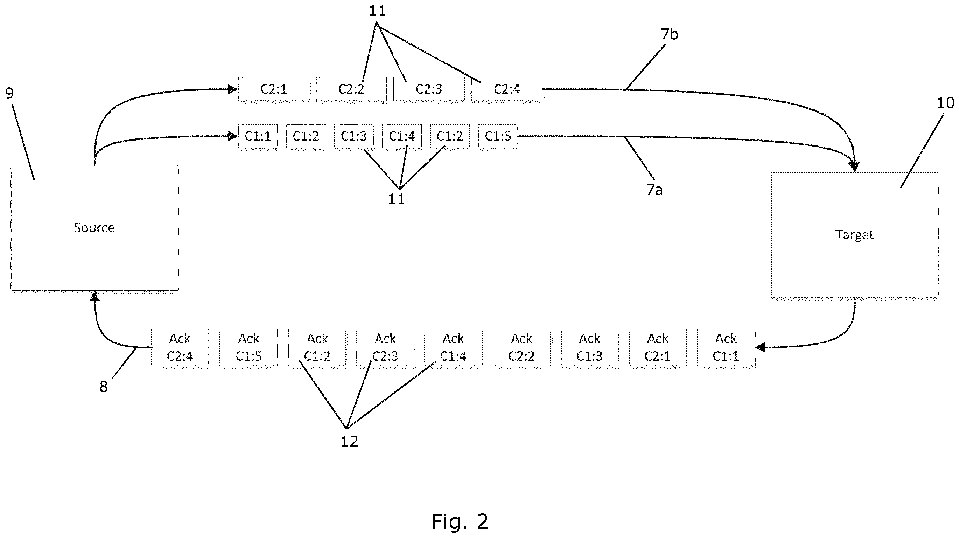

Fig. 2 is a block diagram illustrating a method according to an embodiment of the invention. More particularly, Fig. 2 illustrates communication between a data source 9, in the form of one or more wind turbines, possibly via a central unit as illustrated in Fig. 1, and a data centre 10 which is arranged remotely with respect to the data source 9.

Data packages 11 are transferred from the data source 9 to the remote data centre 10 via a number of parallel first communication channels 7, two of which are shown.

Via communication channel 7a, the data packages C1:1, C1:2, C1:3, C1:4 and C1:5 are transferred, and via communication channel 7b, the data packages C2:1, C2:2, C2:3 and C2:4 are transferred. The data transfer via communication channel 7a and via the communication channel 7b takes places independently of each other. Furthermore, in each of the communication channels 7a, 7b, the data packets 11 are transferred without awaiting expected receipt of previously transferred data packages 11 at the remote data centre 10. Thereby the data transfer capacity of the communication channels 7a, 7b can be fully utilised.

Upon receipt of a data package at the remote data centre 10, an acknowledgement 12 is generated and transferred to the data source 9 via a second communication channel 8. The acknowledgements 12 are transferred in the order in which the corresponding data packages 11 were received at the remote data centre 10. When the acknowledgements 12 are received at the data source 9, it can be verified that the corresponding data packages 11 were safely received at the remote data centre 10.

In the example illustrated in Fig. 2, the data source 9 sequentially transfers data packages C1:1, C1:2, C1:3 and C1:4, in this order, via communication channel 7a. Simultaneously, the data source 9 sequentially transfers data packages C2:1, C2:2, C2:3 and C2:4, in this order, via communication channel 7b.

At the remote data centre 10, the data packages 11 are sequentially received in the following order: C1:1, C2:1, C1:3, C2:2, C1:4, etc. As the data packages 11 are received at the remote data centre 11, the acknowledgements 12 are generated and transferred to the data source 9 via communication channel 8. The data source 9 keeps track of the received acknowledgements 12, in order to ensure that the data packages 11 have in fact been received at the remote data centre 10.

However, the data source 9 registers that the acknowledgements 12 of data packages C1:3 and C1:4 are received, but not the acknowledgement of data package C1:2, which was transferred via communication channel 7a before each of the data packages C1:3 and C1:4. Data package C1:2 is therefore considered lost. Accordingly, data package C1:2 is retransferred via communication channel 7a before the next data package 11 in line, i.e. data package C1:5, is transferred. The acknowledgement of the retransferred data package C1:2 is duly received at the data source 9.

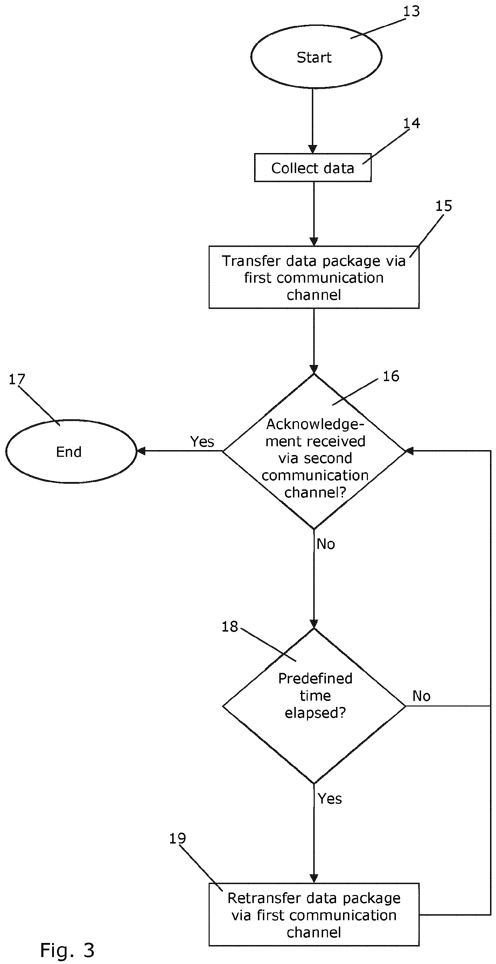

Fig. 3 is a flow chart illustrating a method according to an embodiment of the invention. The process is started at step 13. Art step 14, data is collected at one or more wind turbines. At step 15 the collected data is transferred, in the form data packages, from the at least one wind turbine to a remote data centre, via at least one first communication channel.

At step 16, it is investigated whether or not an acknowledgement of receipt of a given data package has been received, via a second communication channel, which is parallel to and separate from the first communication channel. If this is the case, then it has been ensured that the data package was safely received at the remote data centre. The process is therefore forwarded to step 17, where the process is ended.

In the case that step 16 reveals that an acknowledgement of the data package has not been received, the process is forwarded to step 18, where it is investigated whether or not a predefined time has elapsed since the data package was transferred. The predefined time represents a time period which may be expected to elapse before acknowledgement is received, for instance the time it would take to transfer the data package via the first communication channel and the acknowledgement via the second communication channel, i.e. twice the transfer time between the wind turbine and the remote data centre.

If the predefined time period has not yet elapsed, the data package may in fact have been received safely at the remote data centre, but the acknowledgement has just not reached the wind turbine yet. Accordingly, when this is the case, the process is returned to step 16 for continued monitoring for receipt of the acknowledgement.

In the case that step 18 reveals that the predefined time has elapsed, this is an indication that either the data package was not received at the remote data centre, i.e. the data package was lost, or the generated acknowledgement was lost. In any event, it is not possible to verify that the data package was received at the remote data centre, and therefore the process is forwarded to step 19, where the data package is retransferred. Subsequently, the process is returned to step 16 in order to investigate whether or not acknowledgement of the retransferred data package has been received.

## Claims

1. A method for transferring data from at least one wind turbine (2, 9) to a data centre (10) arranged remotely with respect to the wind turbine (2), the method comprising the steps of:
- transferring data packages (11) from the wind turbine (2, 9) to the data centre (10), via at least one first communication channel (7),
- upon receipt of a data package (11) at the data centre (10), generating an acknowledgement (12) and transferring the acknowledgement (12) from the data centre (10) to the wind turbine (2, 9), via a second communication channel (8) being parallel to the first communication channel(s) (7), and
- receiving the acknowledgements (12) at the wind turbine (2, 9).

2. A method according to claim 1, wherein the second communication channel (8) is dedicated for transferring acknowledgements (12) from the data centre (10) to the wind turbine (2, 9).

3. A method according to claim 1 or 2, wherein data packages (11) are transferred sequentially from the wind turbine (2, 9) to the data centre (10), and wherein a subsequent data package (11) is transferred without awaiting the acknowledgement (12) of a previous data package (11).

4. A method according to any of the preceding claims, wherein the step of transferring data packages (11) from the wind turbine (2, 9) to the data centre (10) is initiated at the wind turbine (2, 9).

5. A method according to any of the preceding claims, further comprising the step of:
- in the case that a data package (11) has been lost, retransferring the data package (11).

6. A method according to claim 5, further comprising the step of determining that a data package (11) has been lost if a predetermined time period has elapsed since the data package (11) was transferred from the wind turbine (2, 9) to the data centre (10), and no acknowledgement (12) has been received yet.

7. A method according to claim 5 or 6, further comprising the step of determining that a data package (11) has been lost if acknowledgement (12) of at least one subsequent data package (11) has been received, and no acknowledgement (12) of the data package (11) has been received yet, where the at least one subsequent data package (11) was transferred from the wind turbine (1, 9) to the data centre (10) after transfer of the data package (11) from the wind turbine (2, 9) to the data centre (10).

8. A method according to any of the preceding claims, wherein the data packages (11) are transferred from the wind turbine (2, 9) to the data centre (10) via at least two parallel first communication channels (7).

9. A method according to any of the preceding claims, further comprising the steps of:
- generating control commands for the wind turbine (2, 9) based on data of at least one data package (11), at the data centre (10), and
- transferring the generated control commands from the data centre (10) to the wind turbine (2, 9).

10. A method according to claim 9, further comprising the step of operating the wind turbine (2, 9) in accordance with the generated control commands.

11. A method according to any of the preceding claims, wherein the wind turbine (2, 9) forms part of a wind farm (1), the wind farm (1) comprising a plurality of wind turbines (2, 9), and wherein the data packages (11) are transferred from the wind farm (1) to the data centre (10) and the acknowledgements (12) are received at the wind farm (1).
